# EUROPÄISCHE PATENTANMELDUNG

(11) **EP 1 916 056 A1**
(43) Veröffentlichungstag der Anmeldung: **30.04.2008**
(21) Anmeldenummer: 06123002.5
(22) Anmeldetag: 26.10.2006
(51) Int. Cl.: B23Q 1/26, F16C 25/08, F16F 1/02

(54) **Federhülse**

(71) Anmelder: Step-Tec AG, 4542 Luterbach (CH)
(72) Erfinder: Schneider, Kurt, 2565 Jens (CH)
(74) Vertreter: Weiss, Wolfgang

(57) **Zusammenfassung**

Die Erfindung betrifft eine Federhülse (1) zur Vorspannung eines Lagers (2), dadurch gekennzeichnet, dass die rohrförmige Federhülse (1) zwei zylindrische Bereiche (3, 4) aufweist, wobei der eine Bereich (3) einen grösseren Durchmesser d₁ als der Durchmesser d₂ des andere Bereiches (4) aufweist und dass die Federhülse (1) Schlitze (5) aufweist.

## Beschreibung

Die Erfindung betrifft eine Federhülse zur Vorspannung eines Lagers in beispielsweise Hochfrequenzspindeln.

In Werkzeugmaschinen, insbesondere Werkzeugmaschinen mit Hochfrequenzspindeln, unterliegen die gelagerten Spindeln dem Einfluss von Bearbeitungskräften vor allem bei hohen Arbeitsfrequenzen. Diese Kräfte können sich negativ auf die Genauigkeit der Bearbeitung eines Werkstückes auswirken. Üblicherweise werden zum Spielausgleich vorgespannte Wälzlagerungen, z.B. Schräg-, Kegelrollen- oder reine Axiallager eingesetzt. Um nun diesen Lagern Laufruhe, Dauergenauigkeit und Steifigkeit zu erreichen, werden sie mit mechanischen Mitteln vorgespannt, wie z.B. Einstellscheiben, Wellenmuttern, Tellerfederpakete.

Eine derartige Spindel ist aus der DE 39 00 121 A1 bekannt. Es wird eine Vorrichtung zur Einstellung der Axialkomponente für die spielfreie Vorspannung von Wälzlagern und Spindelmuttern angegeben, wobei die Vorrichtung ein im Kraftfluss der Axialabstützung angeordnetes, hinsichtlich seiner Stellgrösse variables Spannelement enthält. Das Spannelement ist anbei ein aus scheibenförmigen Piezoelementen zusammengesetztes Paket.

In der EP 1 004 783 A2 wird eine weitere Spindel für eine Werkzeugmaschine beschrieben. Es handelt sich insbesondere um eine Hochfrequenzspindel mit einem ersten Spannelement zum Einstellen einer Vorspannung eines in der Spindel angeordneten Lagers, insbesondere eines Schrägkugellagers, wobei das erste Spannelement mindestens einen in seiner Längsausdehnung veränderlichen Piezoaktor aufweist und in Abhängigkeit der Längsausdehnung des Piezoaktors eine veränderbare Vorspannkraft auf zumindest eine Lagerschale des Lagers ausübt. Erfindungsgemäss ist im Kraftfluss zwischen dem ersten Spannelement und der Lagerschale ein Hydraulikelement angeordnet, welches eingangsseitig ein von dem ersten Spannelement beaufschlagtes Antriebsmittel und ausgangsseitig ein Antriebsmittel aufweist, wobei der hydraulisch wirksame Querschnitt des eingangsseitigen Antriebsmittels grösser ist als der Querschnitt des ausgangsseitigen Antriebsmittels.

Das im Stand der Technik zu lösende Problem besteht darin, dass eine an die jeweilige Betriebssituation der Spindel angepasste Lagervorspannung zu erzeugen. Die Lagervorspannung dient dazu, im Betriebsablauf der Spindel jederzeit einen sicheren Kontakt zwischen den Roll - oder Abrollflächen des Lagers zu gewährleisten. Ohne eine derartige Vorspannung kann es durch die wechselnden Belastungen der Spindel beim Bearbeiten eines Werkstückes dazu kommen, dass die Gleitflächen ihren Kontakt zumindest teilweise verlieren.

Bei ungeeigneter Vorspannung besteht weiterhin die Gefahr, dass die Lager beim Betrieb der Spindel mit hohen Drehzahlen beschädigt werden. Der Verschleiss ist in diesem fall aufgrund der höheren Reibung erhöht.

Die Aufgabe der Erfindung liegt somit darin, eine Federhülse vorzuschlagen, die eine optimale axiale Vorspannung der eingesetzten Lager gewährleistet, wobei der Verschleiss der Lager reduziert wird. Im Übrigen soll eine Selbstsperrung vermieden werden.

Diese Aufgabe wird erfindungsgemäss dadurch gelöst, dass die rohrförmige Federhülse zwei zylindrische Bereiche aufweist, wobei der eine Bereich einen grösseren Durchmesser d₁ als der Durchmesser d₂ des andere Bereiches aufweist und dass die Federhülse Schlitze aufweist

Die erfindungsgemässe Federhülse ist so aufgebaut, dass die Berührungsfläche mit der Gehäuseinnenwand des Lagers minimalisiert und die Arbeitsfläche berührungslos ist. Die Federhülse ermöglicht die erforderliche, axiale Verschiebbarkeit der Lager, wobei die Gefahr einer Selbstsperrung verhindert wird.

Die in Unteransprüchen beschriebenen Merkmale werden in der folgenden Beschreibung näher erläutert.

Ein Ausführungsbeispiel der Erfindung ist in der Zeichnung dargestellt und wird im Folgenden näher beschrieben. Es zeigen:
- Fig. 1: eine dreidimensionle Ansicht einer Federhülse
- Fig. 2: eine Schnittansicht der Federhülse gem. Fig. 1
- Fig. 3a und b: Schnittansichten B-B und C-C der Figur 2
- Fig. 4: eine mögliche Lageranordnung mit einer Federhülse

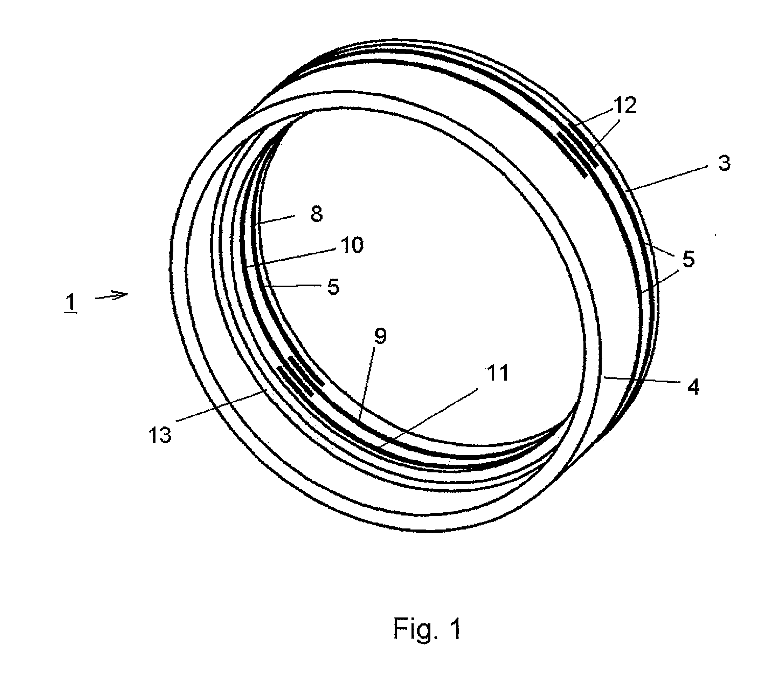

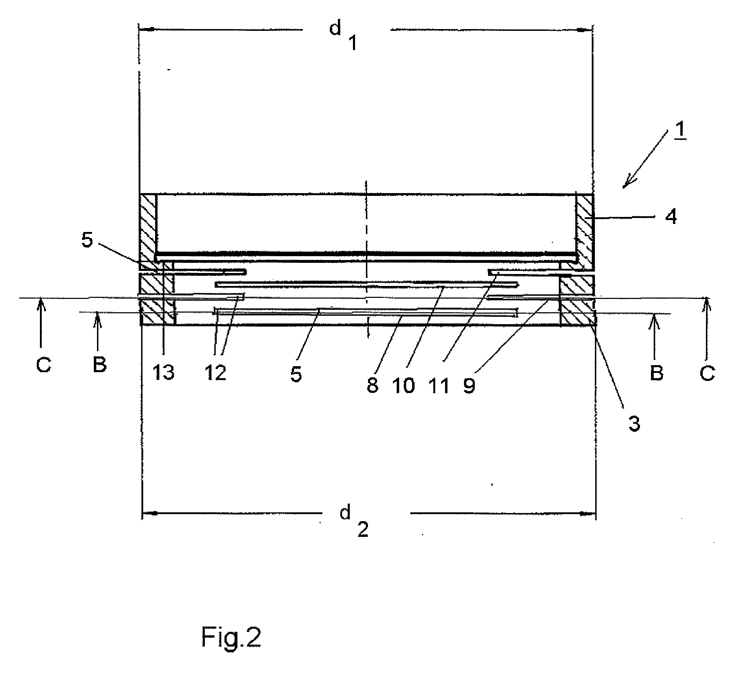

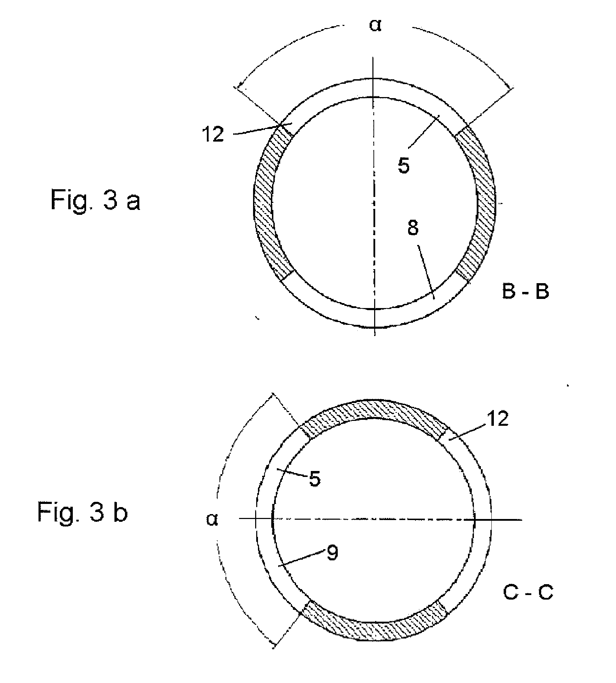

Die Figur 1 zeigt in drei-dimensionaler Ansicht ein Ausführungsbeispiel einer erfindungsgemässen Federhülse 1. Die Figuren 2, 3a und 3b stellen Schnittansichten (Querschnitt in Figur 2, Schnitt B-B von Figur 2 in Figur 3a und Schnitt C-C von Figur 2 in Figur 3b) der Federhülse 1 dar. Alle Bezugszeichen in den verschiedenen Figuren haben dieselbe Bedeutung. Die Federhülse 1 ist rohrförmig mit zwei Bereichen 3 und 4 ausgestaltet. Der Durchmesser, d₁ des Bereiches 3 ist grösser als der Durchmesser d₂ des Bereiches 4 Im Bereich 4 sind kreisbogenförmige Schlitze 5 angeordnet. Die Schlitze 5 sind übereinander in verschiedenen Ebenen 8, 9, 10, 11 positioniert. Zwei aufeinander folgende Schlitze 5, in axialer Richtung gesehen, liegen sich gegenüber. Die Endbereichen 12 der Schlitze 5 überlappen sich. Die Bogenlänge α der Schlitze kann 45° bis 120° betragen. Im Innenraum der Federhülse ist eine Stufe 13 ausgebildet.

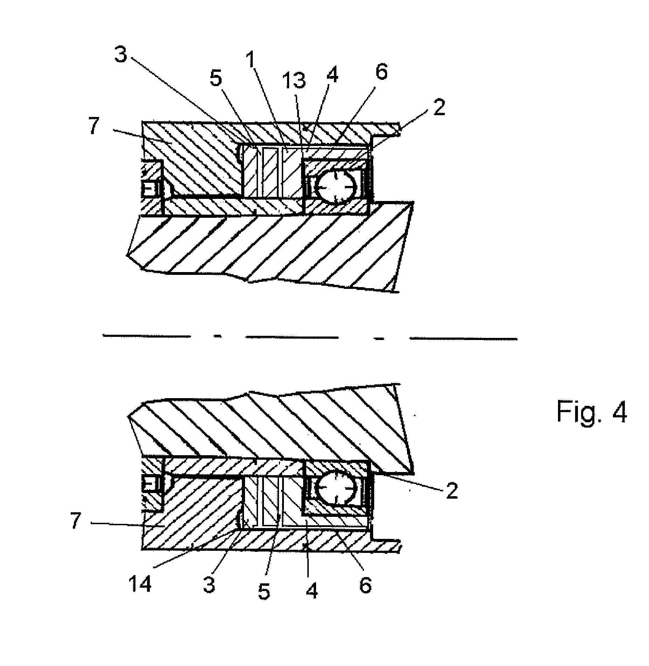

Die Figur 4 zeigt einen Querschnitt von einer Teilansicht einer Lagerung einer Hochfrequenzspindel. Im Lagergehäuse 7 ist ein Lager 2 zu sehen. Zwischen dem Lager 2 und der Stufe 14 des Lagergehäuses 7 ist die Federhülse 1 eingebaut, wobei das Lager 2 in der Stufe 13 der Federhülse 1 eingesetzt ist. Der Bereich 3 berührt die dem Lagergehäuse 7 zugewandten Seite, der Bereich 4 berührt die Wand des Lagergehäuses 7 nicht.

Durch die Anordnung der Schlitze 5 wird in einfacher weise eine erwünschte Federwirkung für die Vorspannung des Lagers 2 erzeugt. Die Tatsache der verschiedenen Durchmesser d₁ und d₂ der bereiche 3 und 4 verhindert eine Selbstsperrung.

Diese einfache Art der Lagervorspannung ist vor allem für den Einsatz in Hochfreguenzspindeln gedacht, bei dem in der Regel eine axiale Belastung erfolgt. Mit dieser erfindungsgemässen Federhülse vermeidet insbesondere bei hohen Drehfrequenzen einen unnötigen Verschleiss.

### Bezugszeichen

- 1: Federhülse
- 2: Lager
- 3: Bereich
- 4: Bereich
- 5: Schlitze
- 6: Innenseite
- 7: Lagergehäuse
- 8: Ebene
- 9: Ebene
- 10: Ebene
- 11: Ebene
- 12: Endbereiche
- 13: Stufe
- 14: Stufe

- d₁: Durchmesser von 3
- d₂: Durchmesser von 4

## Patentansprüche

1. Federhülse (1) zur Vorspannung eines Lagers (2), **dadurch gekennzeichnet, dass** die rohrförmige Federhülse (1) zwei zylindrische Bereiche (3, 4) aufweist, wobei der eine Bereich (3) einen grösseren Durchmesser d₁ als der Durchmesser d₂ des andere Bereiches (4) aufweist und dass die Federhülse (1) Schlitze (5) aufweist.

2. Federhülse (1) nach Anspruch 1, **dadurch gekennzeichnet, dass** die Schlitze (5) in mindestens zwei Ebenen (8, 9, 10, 11) umfangsseitig versetzt angeordnet sind.

3. Federhülse (1) nach den Ansprüchen 1 oder 2, **dadurch gekennzeichnet, dass** die Schlitze (5) in verschiedenen Ebenen (8, 9, 10, 11) gegenüberliegend angeordnet sind.

4. Federhülse (1) nach den Ansprüchen 1, 2 oder 3, **dadurch gekennzeichnet, dass** die Bogenlänge 45° bis 120° beträgt.

5. Federhülse (1) nach mindestens einem der vorherigen Ansprüche, **dadurch gekennzeichnet, dass** sich die Endbereiche der Schlitze in den verschiedenen Ebenen (8, 9, 10, 11) überlappen.

6. Federhülse (1) nach mindestens einem der vorherigen Ansprüche, **dadurch gekennzeichnet, dass** ein Bereich (3) die Innenseite (6) des Lagergehäuses (7) berührt.

7. Federhülse (1) nach mindestens einem der vorherigen Ansprüche, **dadurch gekennzeichnet, dass** ein Bereich (4) die Innenseite (6) des Lagergehäuses (7) nicht berührt.

8. Federhülse (1) nach mindestens einem der vorherigen Ansprüche, **dadurch gekennzeichnet, dass** die Federhülse (1) in Verbindung mit Wälzlagern oder Spindelmuttern verwendet wird.

9. Federhülse (1) nach mindestens einem der vorherigen Ansprüche, **dadurch gekennzeichnet, dass** die Federhülse (1) in Spindeln für Werkzeugmaschinen oder Hochfrequenzspindeln verwendet wird.
